Europäisches Patentamt

**European Patent Office**

**Office européen des brevets**

(19)

(11) Publication number: **0 224 350**
**A2**

(12)

# EUROPEAN PATENT APPLICATION

(21) Application number: 86308656.7

(51) Int. Cl.⁴: **G 01 V 1/40**

(22) Date of filing: **06.11.86**

(30) Priority: **22.11.85 US 800927**

(43) Date of publication of application:
**03.06.87 Bulletin 87/23**

(84) Designated Contracting States: **DE FR GB NL**

(71) Applicant: **MOBIL OIL CORPORATION**
**150 East 42nd Street**
**New York New York 10017 (US)**

(72) Inventor: **Lyle, W.D., Jr.**
**1314 Mockingbird Drive**
**Grapevine Texas 76051 (US)**

**Williams, Donald Michael**
**2341 Mockingbird Drive**
**Grapevine Texas 76051 (US)**

**Willis, Mark Elliott**
**1016 Ridgeview**
**Carrollton Texas 75007 (US)**

(74) Representative: **Cooper, John Anthony et al**
**Mobil Court 3 Clements Inn**
**London WC2A 2EB (GB)**

(54) **Borehole logging tool.**

(57) A flexural wave borehole logging tool 10 employs a multisegmented, point-force type acoustic transmitter 17 for exciting dipolar flexural wave energy with dipole motion in a plurality of azimuthal directions around the axis of a borehole 12. The transmitter 17 comprises a plurality of bender-bar type transducers spaced circumferentially about the axis of the tool 10 with their inner surfaces facing the borehole tool axis and their outer surfaces facing the formations 14 surrounding the borehole. These transducers are selectively modulated to focus dipolar flexural wave energy into the formations 14 in a plurality of preferred azimuthal directions about the borehole 12.

EP 0 224 350 A2

**Description**

BOREHOLE LOGGING TOOL

This invention relates to a borehole logging tool.

In sedimentary rocks, large vertical changes in properties occur as the result of changes in depositional conditions. Horizontal (or lateral) changes within a formation are known to occur, but these are generally much smaller than vertical changes. However, such lateral changes may be of greater importance in petroleum exploration and production. This variation of a property or properties with direction is termed "anisotropy". For example, horizontal anisotropy of elastic properties may affect the interpretation of seismic prospecting data. In petroleum production, permeability anisotropy, caused by preferential arrangement of pores and/or fractures, is often an important factor in both primary and enhanced recovery. Stress anisotropy is important in petroleum well stimulation by hydraulic fracturing because the azimuth of induced fractures is generally parallel to the maximum horizontal stress direction. In many cases, the directions of natural and induced fractures are coincident.

The present invention is directed to a system for determining shear velocity and attenuation anisotropy direction and magnitude surrounding a borehole. Shear waves will be more responsive to horizontal anisotropies than compressional waves because the direction of particle motion of shear waves is predominately normal to the direction of wave propagation. Unfortunately, it is not possible to directly generate shear waves with an acoustic transmitter hanging in the borehole fluid and not clamped directly to the rock formation. However, page 1152 of "Acoustic Waves from an Impulsive Source in a Fluid-filled Borehole," Journal Acoustical Society of America, Vol. 55, No. 6, (June 1974), pp. 1144-1157, by W. L. Roever and J. H. Vining, shows that the low frequency energy of a dipolar flexural wave propagates at the shear velocity of the formation. Thus, it is possible to obtain the formation shear wave velocity from the propagation characteristics of the dipolar flexural wave which is excited by a point-force type transducer hanging freely in the borehole fluid.

In accordance with the present invention, there is provided a well logging tool for identifying shear wave energy anisotropy characteristics of subsurface formations surrounding a borehole comprising:

a) a multisegmented, point-force type acoustic transmitter for exciting dipolar flexural wave energy with dipole motion in a plurality of azimuthal directions around the axis of the borehole, and

b) an acoustic receiver spaced from said transmitter for receiving said dipolar flexural wave energy returning to the borehole from said formations with dipole motion in the same azimuthal directions as said dipolar flexural wave energy was transmitted into said formations by said transmitter.

Preferably, the transmitter comprises a plurality of bender-bar type transducers spaced circumferentially about the axis of the borehole tool with their inner surfaces facing the borehole tool axis and their outer surfaces facing the formations surrounding the borehole. The electrical polarities of these transducers are modulated to focus dipolar flexural wave energy into the formations in the particular azimuthal directions associated with the orientations of said transducers about the borehole tool axis. Different amplitude weightings can be applied to these polarities during modulation so as to more sharply focus the dipolar flexural wave energy.

In a more specific embodiment, a plurality of pairs of transducers are oppositely positioned about the axis of the borehole tool. The outer surfaces of each pair of transducers are excited with opposite electrical polarities so as to focus dipolar flexural wave energy into the formations in the particular azimuthal direction associated with the orientations of such pair of transducers about the axis of the borehole tool. These pairs of transducers are alternately modulated individually or in select groupings so as to focus dipolar flexural wave energy into the formations. When modulated in select groupings, the amplitudes of the electrical polarities of the pairs of transducers in each select grouping are weighted so as to more sharply focus the dipolar flexural wave energy, the center pair of transducers in each grouping being excited with the greater amplitude electrical polarity.

In a still further aspect, the plurality of pairs of transducers are positioned about the borehole tool axis in a further plurality of groupings which are spaced apart along the borehole tool axis. Each pair of transducers in each of these spaced-apart groupings are azimuthally oriented about the borehole tool axis so as to focus dipolar flexural wave energy in an azimuthal direction that differs from that of the pairs of transducers in the other spaced-apart groupings. Pairs of transducers may be alternately excited in each of these spaced-apart groupings so as to focus dipolar flexural wave energy into the formations alternately from such groupings.

The invention will now be more particularly described with reference to the accompanying drawings in which:

FIG. 1 illustrates an acoustic borehole logging system according to one example of the present invention.

FIGS. 2 and 5 are pictorial representations of the excitation of oriented dipolar flexural wave acoustic energy in formations adjacent to a borehole by the borehole logging system of FIG. 1.

FIGS. 6-8 illustrate a multisegmented, bender-bar type transmitter used in the borehole logging system of FIG. 1 to generate oriented dipolar flexural wave acoustic energy.

FIGS. 9 and 10 illustrate alternate embodiments of respectively means for supporting the transmitter of FIGS. 6-8 in the borehole logging system of FIG. 1.

FIG. 11 illustrates an alternate embodiment of the bender-bar type transmitter of FIGS. 6-8.

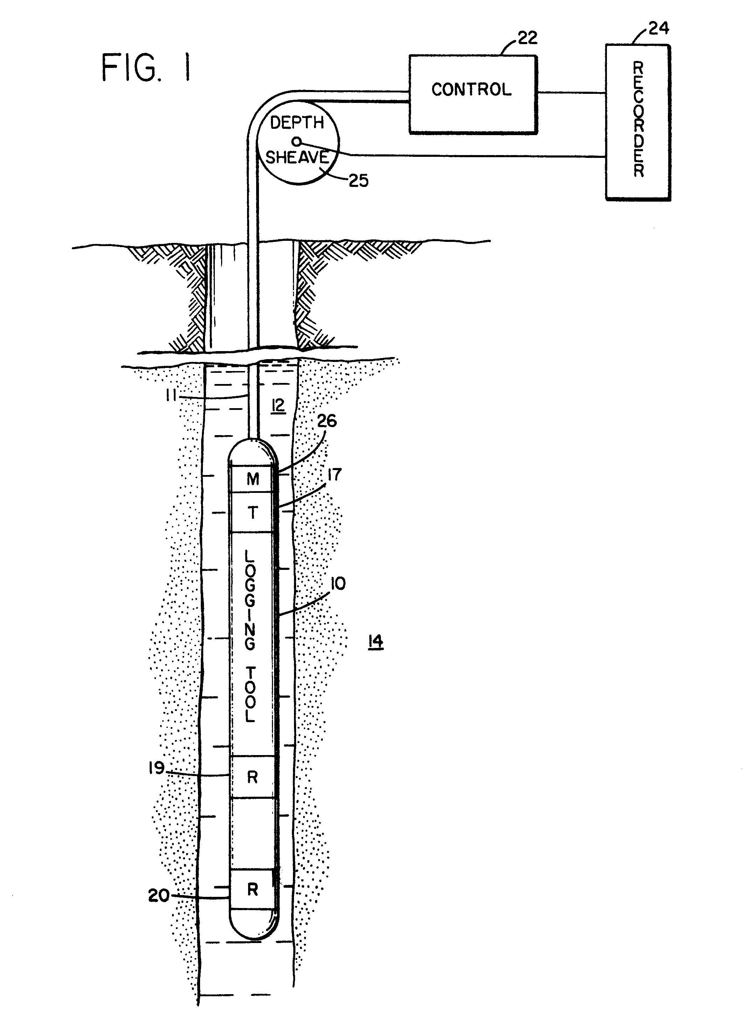

Referring to the drawings, Figure 1 illustrates a preferred embodiment of a multi-azimuthally oriented dipolar flexural wave logging system for carrying out the shear velocity anisotropy measurements of the present invention. The logging system includes an elongated logging tool 10 which is suspended from a cable 11 within a borehole 12 which traverses a subterranean formation of interest, indicated by reference character 14. Formation 14 may be a suspected oil- or gas-bearing formation which is to be characterized in regard to its porosity, fluid saturation, or such other information as may be desired. The borehold 12 is filled with a liquid such as drilling mud.

The logging tool 10 comprises an acoustic point-force transmitter section 17 and acoustic dipole pressure gradient or particle motion receiver sections 19 and 20. Signals from the logging tool 10 are transmitted uphole by the conductors in cable 11 to any suitable utilization system at the surface. For example, the utilization system is illustrated as comprising an uphole control circuit 22 and recorder 24 and a depth measuring sheave 25 in order that the output from circuit 22 may be correlated with depth. The transmitter and receiver sections are controlled through suitable timing circuitry located either uphole, or in the logging tool itself. Typically, the control circuitry 22 will comprise a time base generator which operates to produce pulses to excite the transducers of transmitter section 17 and to gate the transducers of receiver sections 19 and 20. In a preferred embodiment, the transducers are of the bender-bar type. As transmitters, such transducers generally attempt to achieve a point-force application of acoustic energy to the borehole wall. This point-force generates a dipole anti-symmetric flexural wave whose low frequency energy propagates at the shear wave velocity, as described above.

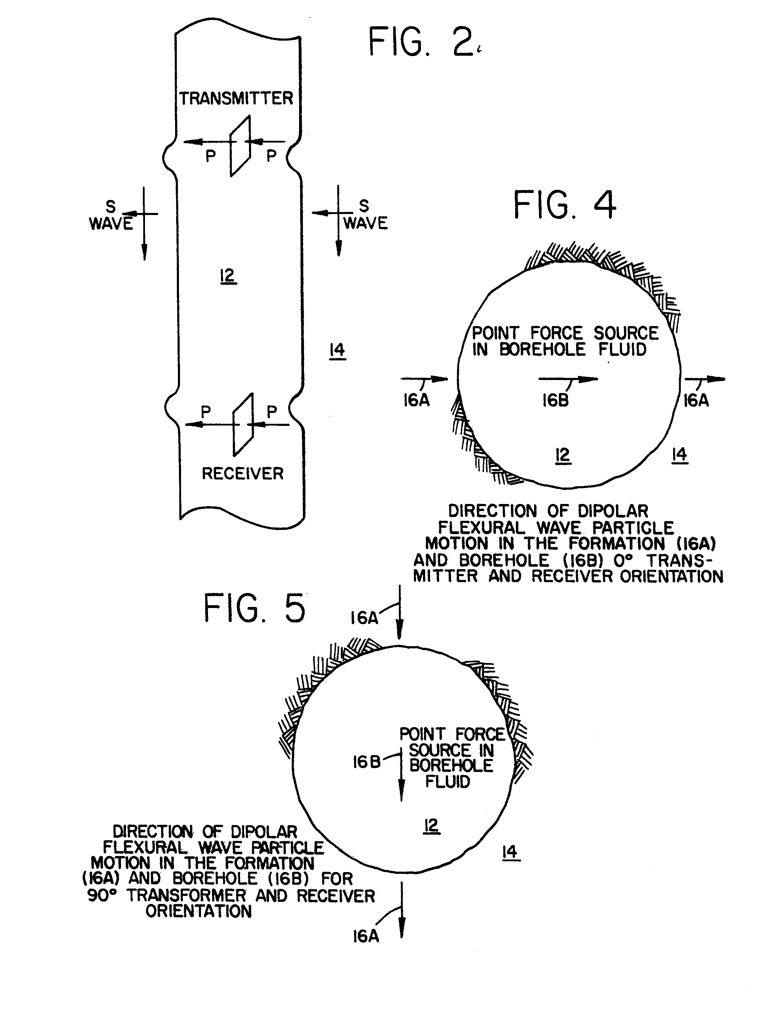

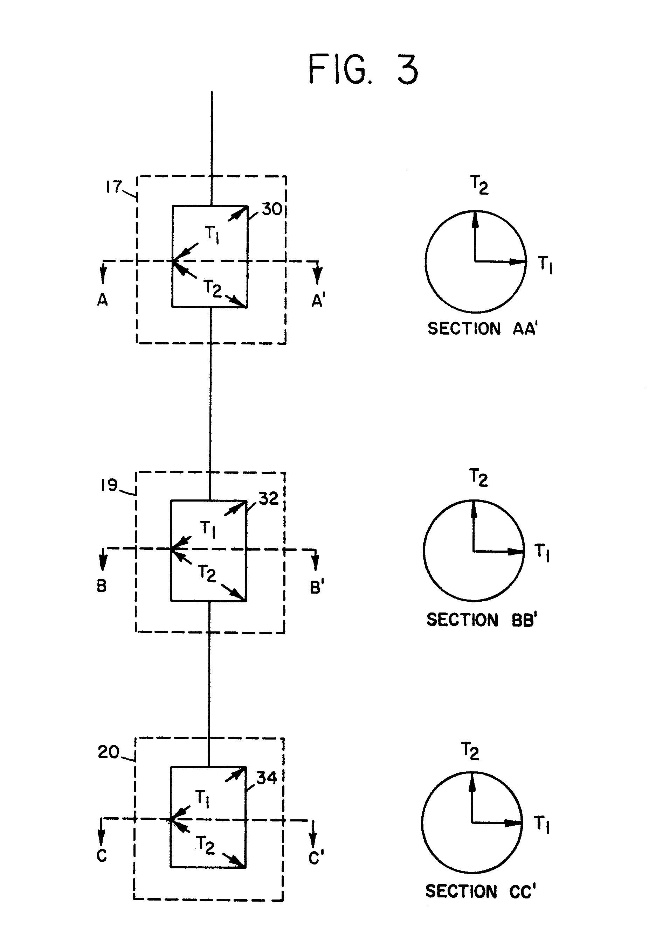

Conventional multidirectional (symmetric) sources generate a normal mode wave from whose properties the formation shear velocity is derived. This wave is often referred to as a pseudo-Rayleigh, reflected conical, and even a "shear wave" in the literature. This wave cannot exist in loosely consolidated rock where the formation shear velocity is less than the fluid compressional velocity; however, the determination of formation shear wave properties may still be determined from the point-force generated dipolar flexural wave since it is still present under these conditions. The dipolar flexural wave is easier to detect since it is the only wave generated by the point-force source. The pseudo-Rayleigh wave is harder to detect since its amplitude is frequently masked by the other waves which are generated by a symmetric point source. Thus, dipolar flexural waves provide better data for determining shear wave velocity and attenuation. In addition, point-force transmitters excite dipolar flexural waves with azimuthally polarized particle motion, as illustrated in FIG.2. Such azimuthally oriented patterns are obviously necessary in anisotropy logging since the changes in velocity and attenuation with azimuth are required to determine anisotropy.

Canadian Patent No. 1,152,201 describes a dipolar flexural wave acoustic logging system employing such a point-force transducer for dipolar flexural wave transmission and reception. Preferably, the point-force transducer is a bender-bar type transducer. The bender-bar transducer is well known and takes the form of an element which responds to an applied electrical field such that its opposed surfaces bend in the same direction in a conforming manner. Thus, the transducer acts as approximately a point-force source for an acoustic dipolar flexural wave signal which may be characterized as comprising a positive pressure wave generated in one direction from one surface and a simultaneous negative pressure wave generated in the opposite direction from the other surface. For example, as described by C. A. Sheridan, et al. "Bender Bar Transducers For Low-Frequency Underwater Sound Sources", presented at the 97th Meeting of the Acoustical Society of America, Cambridge, Massachusetts, June 15, 1979, Honeywell Defense Electronics Division, Seattle, Washington, August 20, 1979, a suitable bender-type transducer may take the form of piezoelectric elements bonded together in a manner such that one side of the transducer is driven in extension, while the other side is driven in contraction or is not driven. The result is that both sides of the transducer then bend in a conforming manner in response to an applied voltage. A suitable bender-type transducer for use in the present invention is described in detail in the aforementioned Canadian Patent No. 1,152,201 and comprises two piezoelectric discs which are bonded together and encased in a plastic "potting" compound. The two ceramic discs are reversed in polarity such that one element responds to an applied voltage to expand, while the other contracts. The result is that the element flexes in response to each voltage pulse such that one surface is concave and the other is convex. The frequency of the acoustic signal produced by this transducer ranges from about 1 to 6 KHz with a predominant frequency of about 3 KHz.

The electrical pulses produced by the time base generator of control circuit 22 are preferably voltage spikes; that is, voltage pulses of relatively high amplitude and short duration whose frequency spectrum is extremely broad. Energizing the transducer of transmitter section 17 with voltage spikes causes the bender-bar transducers to resonate at frequencies determined by their properties. For example, the time base generator may generate a train of triggering pulses which produce a pulse repetition rate from the transmitter section 17 of 15 acoustic pulses per second. Receivers 19 and 20 may be gated alternatively in order to prevent cross-feed within the cable 11, as will be readily recognized by those skilled in the art. For example, the transducers of receiver section 19 may be gated on during an interval of from 0.5 to 30 milliseconds subsequent to a first acoustic pulse from transmitter section 17. Receiver section 19 is then gated off, and after the next succeeding pulse from transmitter section 17, receiver section 20 is gated on. For example, receiver section 20 may be gated on during a similar interval from 0.5 to 30 milliseconds subsequent to the transmitter output pulse. The logging tool may be moved through the well at any suitable rate while it is operated to generate and receive the acoustic pulses. Typically, the tool will be lowered to the bottom of the interval to be logged and then pulled upwardly during the logging measurements at a speed of at least 6.1m (20

3

feet) per minute. Somewhat greater logging speeds, e.g., 18.3m (60 feet) per minute, normally can be used.

At the surface, the uphole circuitry operates on the signals from receiver sections 19 and 20 to produce signals representative of the travel time between receiver sections 19 and 20 and the difference in amplitude between the acoustic signals detected by receiver sections 19 and 20. The circuitry employed for determining the time interval between the acoustic signal arrival at receiver sections 19 and 20 may be of any suitable type. For example, the pulses employed to trigger the transmitter may also be applied to a ramp function generator to initiate a signal which increases monotonically with time. For example, the ramp function generator may respond to a triggering pulse to generate a voltage which increases linearly with time. Thus, the amplitude of the voltage is directly proportional to the time following generation of the acoustic signal by transmitter section 17. The output from the ramp function generator is applied through gates controlled by the outputs from receiver sections 19 and 20 to respective voltage storage means. Thus, when an acoustic signal is received at receiver section 19, the resulting transducer voltage is applied to open one gate to pass the voltage from the ramp function generator to a first storage means. When the next signal is received by receiver section 20, the transducer signal is applied to open another gate to pass the output from the ramp function generator to a second storage means. The two voltage signals are then applied to a difference circuit, the output of which is recorded in correlation with depth to provide a travel time log. The amplitude parameter may similarly be determined through the use of any suitable circuitry. For example, the peak voltage outputs from receiver sections 19 and 20 may be applied to a difference circuit which produces a voltage which is representative of the difference in the maximum amplitudes of the acoustic signals received by receiver sections 19 and 20. The output from this difference circuit is then recorded to provide a log of attenuation within the formation. Such analysis and control circuitry is well known to those skilled in the art, and for a further description thereof, reference is made to U.S. Patent No. 3,191,145 to Summers. Also, while two receiver sections 19 and 20 are shown, it will also be recognized that the logging tool may be equipped with additional receivers, in which case a measured parameter may be the travel time between transmitter 17 and such additional receiver sections. Typically, the first receiver section 19 is spaced 1.5 to 4.6m (5 to 15 feet) from the transmitter section 17. A typical spacing between receiver sections 19 and 20 is about 0.6 to 1.5m (2 to 5 feet).

In order to utilize the logging system of FIG. 1 to identify any shear velocity and attenuation anisotropy characteristic of the formation surrounding the borehole, it is necessary that the dipolar flexural wave travel times and attenuation through a plurality of differing azimuthal polarizations about the borehole be measured and compared. A particular configuration for the transmitter section 17 and receiver sections 19 and 20 for generating and receiving such a plurality of azimuthally oriented dipolar flexural waves is shown diagrammatically in FIG. 3 for at least two differing azimuthal directions, $T_1$ and $T_2$.

In such configuration, a transmitter 30 of transmitter section 17 generates a dipolar flexure wave particle motion in a first azimuthal direction, $T_1$, about the borehole determined by the positioning or focusing of the transmitter 30 with respect to the logging tool axis. This azimuthal direction may, for example, be as shown in FIG. 4 for a 0° directional orientation. To receive this first dipolar flexural wave transmission, a receiver 32 of receiver section 19 and a receiver 34 of receiver section 20 are both positioned, or focused, in synchronism with the transmitter 30 about the logging tool axis so as to receive dipolar flexural energy primarily from such first azimuthal direction, $T_1$. Following the generation and measurement of such first dipolar flexural energy transmission, a second transmitting pulse generates an oriented dipolar flexural wave particle motion in a second differing azimuthal direction, $T_2$, about the borehole axis as determined by the positioning, or focusing, of the transmitter 30 with respect to the logging tool axis. This azimuthal direction may, for example, be as shown in FIG. 5 for a 90° directional orientation. To receive this second dipolar flexural energy transmission, the receiver 32 of receiver section 19 and the receiver 34 of receiver section 20 are both positioned, or focused, in synchronism with the transmitter 30 about the logging tool axis so as to receive energy primarily from such second azimuthal direction, $T_2$. FIGS. 3-5 are, therefore, illustrative of a 90° rotational orientation about the borehole axis between such azimuthal directions $T_1$ and $T_2$.

Since these two dipolar flexural wave energy transmissions, $T_1$ and $T_2$, travel with different velocities, as discussed above, a difference in their measured velocities and attenuation versus azimuth identifies shear wave velocity and attenuation anisotropy within the formation around the borehole.

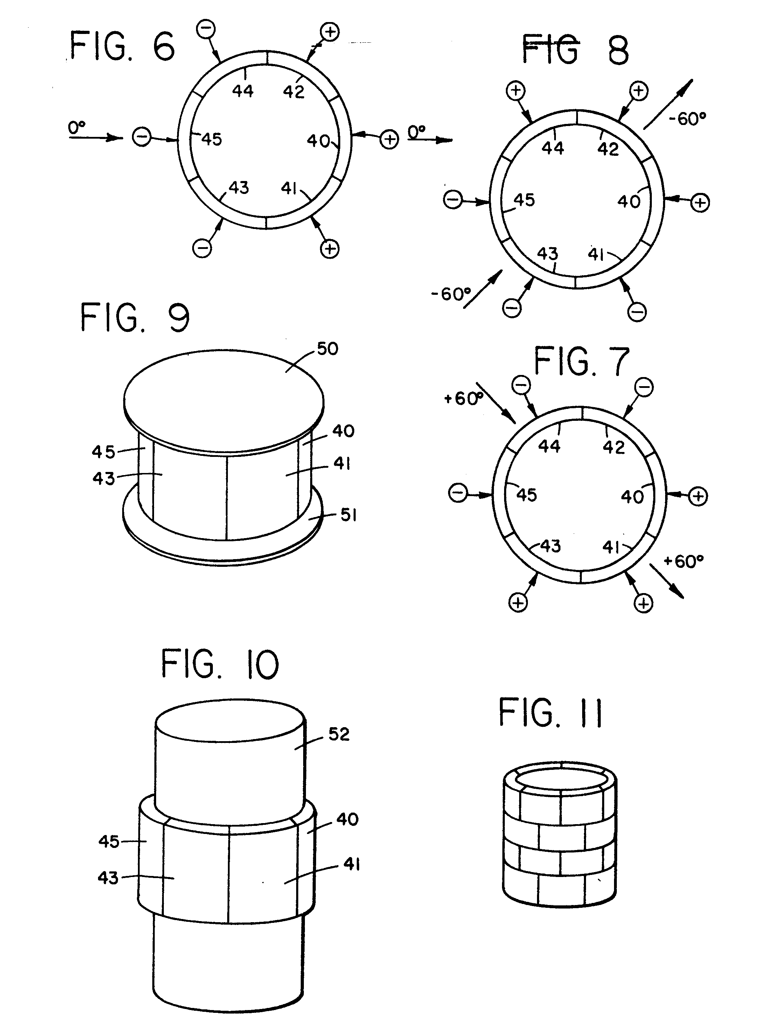

Even though only two azimuthal directions of dipolar flexural wave particle motion are shown in FIGS. 3-5 for purposes of illustration, it is a specific aspect of the present invention to sequentially transmit and receive dipolar flexural wave energy in a plurality of azimuthal directions around the borehole. This is accomplished by the use of a multisegmented transmitter 17 and receivers 19 and 20 which may be of any suitable configuration for detecting such dipolar flexural wave energy. Since the transmitter and receivers may be identical in configuration, only the multisegmented transmitter 17 is hereinafter described in detail in conjunction with FIGS. 6-8 for purposes of simplicity.

Referring now to FIG. 6, there is shown a top view, taken along the borehole axis, of multisegmented transmitter 17 comprising a plurality of bender-bar transducers oriented at equally spaced azimuthal orientations about the borehole axis. In FIG. 6, six such transducers are shown for purposes of illustration of the generation of dipolar flexural wave particle motion every 60° about the borehole axis. Additional transducers may be employed to narrow the directional orientation between the dipolar flexural wave energy transmissions even further, or in the alternative, four transducers may be employed to enlarge the directional orientation to 90°.

More particularly, FIG. 6 is a top view showing only the plurality of bender-bar type transducers 40-45. These transducers are shown to be curved in shape so as to form a circular outer surface of the multisegmented transmitter when mounted in the borehole logging tool, such as between top and bottom support members 50 and 51, respectively, of FIG. 9. However, this is by way of example only. Alternatively, such transducers may each be planar in form so as to form a hexagonal outer surface of the multisegmented transducer. Other support means, such as central core member 52 of FIG. 10 to which the inner surfaces of the transducers are affixed, may be provided in lieu of the top and bottom support members 50 and 51.

Referring again to FIG. 6, dipolar flexural wave particle motion with a 0° azimuthal direction of focus is generated when a positive ( + ) polarity is applied to the outer surfaces of transducers 40-42 and a negative (-) polarity is applied to the outer surfaces of transducers 43-45. To reverse the azimuthal direction of focus (i.e., 180° directional change) of the generated dipolar flexural wave particle motion, the applied polarities are reversed. In FIG. 7, a 60° clockwise change ( + 60°) in the azimuthal direction from that of FIG. 6 is provided for the dipolar flexural wave particle motion by applying the positive polarity to the outer surfaces of transducers 40, 41 and 43 and the negative polarity to the outer surfaces of transducers 42, 44 and 45. Similarly, in FIG. 8, a 60° counterclockwise (-60°) change in the azimuthal direction from that of FIG. 6 is provided by applying the positive polarity to the outer surfaces of transducers 40, 42 and 44 and the negative polarities to the outer surfaces of transducers 41, 43 and 45. Again, by reversing the applied polarities, the + 60° and -60° changes can be reversed in direction (i.e., changed in direction by 180°).

The following TABLE I illustrates the electrical modulation polarities associated with the 0°, + 60° and -60° azimuthal directions of FIGS. 6-8, respectively.

## TABLE I

| Clockwise Dipole Direction | Modulated Transducer Polarity | | | | | |
|---|---|---|---|---|---|---|
| | 40 | 41 | 42 | 43 | 44 | 45 |
| 0° | + | + | + | − | − | − |
| +60° | + | + | − | + | − | − |
| −60° | + | − | + | − | + | − |

As can be seen from the foregoing, any number of transducers greater than four may be employed. However, to uniquely identify shear wave anisotropy in the formations surrounding a borehole, three or more different azimuthal orientations of dipolar flexural wave particle motion are preferred, thereby requiring six or more transducers. An odd number of transducers would result in imperfect dipole motion. As the number of transducers increases, such imperfect dipole motion is diminished.

It may be too cumbersome in a borehole logging tool to provide a great number of such transducers in circumferential manner around the borehole axis. For example, if 24 transducers are desired, it might be more practical to vertically stack four of six-element transducers in a staggered manner about the borehole axis. In this way, a composite transmitter simulates a 24-element transmitter with four groupings of six transducers each, as shown in FIG. 11.

In a yet further aspect of the invention, an even finer degree of azimuthal directional shaping of the dipolar flexural wave particle motion is achieved by modulating the transducers with differing amplitudes as well as polarities. The following TABLE II illustrates one example of such amplitude modulation that even more sharply directs the transmitted dipolar flexural wave signals in the 0°, + 60° and -60° azimuthal directions.

## TABLE II

| Clockwise Dipole Direction | Modulated Transducer Polarity & Amplitude | | | | | |
|---|---|---|---|---|---|---|
| | 40 | 41 | 42 | 43 | 44 | 45 |
| 0° | +0.5 | +1.0 | +0.5 | −0.5 | −1.0 | −0.5 |
| +60° | +1.0 | +0.5 | −0.5 | −1.0 | −0.5 | +0.5 |
| −60° | −0.5 | +0.5 | +1.0 | +0.5 | −0.5 | −1.0 |

## Claims

1. A well logging tool for identifying shear wave energy anisotropy characteristics of subsurface formations surrounding a borehole comprising:

a) a multisegmented, point-force type acoustic transmitter for exciting dipolar flexural wave energy with dipole motion in a plurality of azimuthal directions around the axis of the borehole. and

b) an acoustic receiver spaced from said transmitter for receiving said dipolar flexural wave energy returning to the borehole from said formations with dipole motion in the same azimuthal directions as said dipolar flexural wave energy was transmitted into said formations by said transmitter.

2. The borehole logging tool of claim 1 wherein said transmitter comprises a plurality of bender-bar type transducers spaced circumferentially about the axis of said borehole logging tool with their inner surfaces facing the borehole tool axis and their outer surfaces facing the formations surrounding the borehole.

3. The borehole logging tool of claim 2 and further including means for modulating the electrical polarities of said plurality of transducers so as to focus said dipolar flexural wave energy into said formations in a plurality of preferred azimuthal directions about the borehole axis.

4. The borehole logging tool of claim 3 wherein said modulating means is operable to reverse the electrical polarities applied to said transducers so as to reverse the focusing of said dipolar flexural wave energy by 180°.

5. The borehole logging tool of claim 3 wherein said modulating means selectively applies different amplitude weightings to said electrical polarities in the focusing of said dipolar flexural wave energy into said formations.

6. The borehole logging tool of claim 2 wherein said plurality of transducers comprise a plurality of pairs of said transducers oppositely positioned about the axis of the borehole tool.

7. The borehole logging tool of claim 2 wherein said plurality of pairs of transducers are positioned about the borehole tool axis in a plurality of groupings spaced apart along said borehole tool axis.

8. The borehole logging tool of claim 2 wherein:

a) a first pair of said transducers are oppositely positioned about the axis of the borehole tool and have their outer surfaces excited with opposite electrical polarities so as to focus dipolar flexural wave energy in a first azimuthal direction into the formations surrounding the borehole, and

b) a second pair of said transducers are oppositely positioned about the axis of the borehole tool at a 90° rotational orientation from said first pair of transducers and have their outer surfaces excited with opposite electrical polarities so as to focus dipolar flexural wave energy in a second azimuthal direction into the formations surrounding the borehole which is rotated 90° from the azimuthal direction of the dipolar flexural wave energy from said first pair of transducers.

9. The borehole logging tool of claim 2 wherein:

a) a first pair of said transducers are oppositely positioned about the axis of the borehole tool and have their outer surfaces excited with opposite electrical polarities so as to focus dipolar flexural wave energy in a first azimuthal direction into the formations surrounding the borehole,

b) a second pair of said transducers are oppositely positioned about the axis of the borehole tool at a +60° rotational orientation from said first pair of transducers and have their outer surfaces excited with opposite electrical polarities so as to focus dipolar flexural wave energy in a second azimuthal direction into the formations surrounding the borehole which is rotated +60° from the azimuthal direction of the dipolar flexural wave energy from said first pair of transducers.

10. The borehole logging tool of claim 2 wherein said acoustic receiver comprises a plurality of bender-bar type transducers configured about the axis of the borehole tool in identical manner with that of said transmitter.

0224350

FIG. 1

0224350

FIG. 2

TRANSMITTER

P ← → P

S WAVE

S WAVE

12

14

P ← → P

RECEIVER

FIG. 4

POINT FORCE SOURCE
IN BOREHOLE FLUID

16A → → 16B → 16A →

12          14

DIRECTION OF DIPOLAR
FLEXURAL WAVE PARTICLE
MOTION IN THE FORMATION (16A)
AND BOREHOLE (16B) 0° TRANS-
MITTER AND RECEIVER ORIENTATION

FIG. 5

16A ↓

POINT FORCE
SOURCE IN
BOREHOLE
FLUID

16B ↓

12

14

DIRECTION OF DIPOLAR
FLEXURAL WAVE PARTICLE
MOTION IN THE FORMATION
(16A) AND BOREHOLE (16B) FOR
90° TRANSFORMER AND RECEIVER
ORIENTATION

16A ↓

# FIG. 3

0224350

FIG. 6

44  42

45  40

43  41

0°

FIG. 8

44  42

45  40

43  41

-60°

-60°

FIG. 9

50

45
43

40
41

51

FIG. 7

+60°

44  42

45  40

43  41

+60°

FIG. 10

52

45

43

40

41

FIG. 11